# EUROPÄISCHE PATENTSCHRIFT

(11) **EP 3 914 571 B1**
(45) Veröffentlichungstag und Bekanntmachung des Hinweises auf die Patenterteilung: **02.08.2023**
(21) Anmeldenummer: 20796604.5
(22) Anmeldetag: 29.10.2020
(51) Int. Cl.: C04B 28/02, C04B 28/04, C04B 24/26, C04B 40/00, C04B 41/50, C04B 41/47, C04B 41/62, C04B 41/85, C04B 41/65

(54) **PULVERFÖRMIGER, POLYMERMODIFIZIERTER ZUSATZSTOFF FÜR BETON UND VERFAHREN ZUR HERSTELLUNG EINES BETONS**
POWDERED, POLYMER-MODIFIED ADDITIVE FOR CONCRETE AND METHOD FOR PREPARING A CONCRETE
ADDITIF PULVÉRULENT MODIFIÉ PAR POLYMÈRE POUR BÉTON ET PROCÉDÉ DE FABRICATION D'UN BÉTON

(30) Priorität: 07.11.2019 EP 19207611; 17.12.2019 EP 19216862
(43) Veröffentlichungstag der Anmeldung: 01.12.2021
(73) Patentinhaber: Martellus GmbH, 8125 Zollikerberg (CH)
(72) Erfinder: KLAUCK, Wolfgang Josef, 40670 Meerbusch (DE)
(74) Vertreter: Patentanwaltskanzlei Hinkelmann
(86) Internationale Anmeldenummer: PCT/EP2020/080372
(87) Internationale Veröffentlichungsnummer: WO 2021/089401

(56) Entgegenhaltungen:
- EP-A1- 1 466 937
- EP-A2- 0 725 092
- WO-A1-2014/052034
- WO-A1-2015/141941

## Beschreibung

### Technisches Gebiet

Die Erfindung betrifft einen pulverförmigen, polymermodifizierten Zusatzstoff für Beton, der insbesondere für Schichten im Wege- und Straßenbau geeignet ist, und ein Verfahren zur Herstellung dieses Betons.

### Stand der Technik

Mit den hydraulischen Bindemitteln Zement oder Tragschichtbinder verfestigte bzw. stabilisierte Schichten haben im Verkehrswegebau große Bedeutung. Diese Schichten werden sowohl zur Herstellung des Unterbaus als auch zur Herstellung des Oberbaus von Fahrbahnkonstruktionen in hochrangigen Straßennetzen sowie im Wegebau eingesetzt. Die strukturelle Festigkeit und die Ermüdungsfestigkeit der mit hydraulischen Bindemitteln stabilisierten Schichten sind insbesondere für die Lebensdauer der Oberbaukonstruktionen der Verkehrsflächen von großer Bedeutung.

Zusatzstoffe (Additive) zur Untergrundbefestigung sind bekannt. Insbesondere ist der Einsatz von Polymerdispersionen zur Veredlung von zementösen Bindemitteln bekannt. Der Zusatz von bekannten Polymerdispersionen hat aber Nachteile, da sie hoch zu dosieren sind, um die Porosität und die Wasseraufnahme erheblich abzusenken und um die Haftzugfestigkeit auf einem glatten Untergrund zu steigern. Als Additive zur Untergrundbefestigung auf Basis von hydraulisch gebundenen Tragschichten (HGTs) werden bislang meistens Dispersionssysteme mit Aktivsubstanzgehalten unter 10 Gew.-% verwendet. Diese Dispersionssysteme sind oft dickflüssig, so dass die Auslaufzeiten- bzw. Wartezeiten von diese Dispersionssysteme enthaltenden Containern auf einer Baustelle lang sein können. Überdies sind u.a. wegen des Transportes von viel Wasser die Ökobilanzen dieser Produkte deutlich verbesserungsbedürftig. Schließlich ist die Wasserfestigkeit dieser Dispersionssysteme aufgrund ihres Gehaltes an Chlorid-haltigen Salzadditiven sowie hydrophilen Polymeren limitiert.

Überdies sind polymermodifizierte bauchemische Produkte bekannt. So werden beispielsweise in Fliesenklebern Zemente eingesetzt, denen sogenannte Dispersions- bzw. Redispersionspulver zugesetzt werden. Bei den Dispersions- bzw. Redispersionspulvern handelt es sich um feinteilige Polymerpartikel, die bei der Zugabe von Wasser stabile Dispersionen bilden. Diese Dispersionspulver werden in der Regel durch Sprühtrocknung von Polymerdispersionen hergestellt und sorgen in den pulverförmigen Fliesenklebern und Ausgleichsmassen für eine bessere Verarbeitbarkeit, Haftung und Flexibilität auf kritischen Untergründen. Haftklebrige Dispersionen mit Glasübergangstemperaturen < - 10°C lassen sich in der Regel nicht sprühtrocknen, da die Partikel insbesondere zusammenkleben würden.

Der überwiegende Teil der im Markt verfügbaren Redispersionspulver basiert auf Ethylenvinylacetat-Copolymeren, die mit Polyvinylalkoholen stabilisiert sind und Glasübergangstemperaturen > 0°C besitzen. Mischt man im Nachhinein Redispersionspulver wieder mit Wasser, entmischen sich diese Mischungen in der Regel schon nach wenigen Stunden. Aus diesem Grund kommen Redispersionspulver in der Regel nur für pulverförmige Zement- und Gips-basierte Rezepturen zum Einsatz.

Die Veröffentlichung WO 2010/105979 A1 beschreibt einen polymermodifizierten Zement. Insbesondere wird ein Verfahren zur Herstellung eines insbesondere trockenen, polymermodifizierten hydraulisch, latent-hydraulisch oder puzzolanisch abbindenden bauchemischen Produkts durch Vermählen mindestens eines VinylPolymers zusammen mit mindestens einem hydraulisch, latent-hydraulisch oder puzzolanisch abbindenden Stoff oder dessen mineralischen Vorprodukt beschrieben. Dabei beträgt die Gesamtmenge an Vinyl-Polymer 0,6 bis 10 Gew.-%, bezogen auf das Gesamtgewicht des hydraulisch, latent-hydraulisch oder puzzolanisch abbindenden bauchemischen Produkts, und das Vinyl-Polymer ist ausgewählt aus den Polymeren basierend auf Vinylacetat, Acrylsäure und deren Derivaten, Styrol, Ethylen, Vinylversatat, Vinyllaurat, Vinylchlorid, oder Mischungen von diesen, wobei das Homopolymer des Styrols, sowie Polymere, die imidierte Acrylateinheiten enthalten, ausgenommen sind.

Die Veröffentlichung US 7,968,642 B2 beschreibt ein redispergierbares Polymer, das als eine Redispersionshilfe statt Polyvinylalkohol ein protektives Kolloidsystem beinhaltet, das von 30 Gew.-% bis 100 Gew.-% eines niedrigmolekularen Polyacrylamid-Kolloids mit einem niedrigen Molekulargewicht enthält, welches in einer 20%igen Lösung in Wasser eine Viskosität im Bereich von 200 bis 800 Centipoise hat. Das redispergierbare Polymer kann ein Polymer enthalten, das durch die Emulsionspolymerisation eines Vinyl(meth)acryl-basierten Polymeren gebildet wurde. Das Polymer kann zudem als Pulver oder als Flüssigkeit vorliegen.

Die Veröffentlichung EP 0 725 092 A2 beschreibt redispergierbare, pulverförmige Kern-Mantel-Polymere bestehend aus a) einem Kernpolymerisat aus 80 bis 100 Gew.% an Monomeren aus der Gruppe der Acrylate gegebenenfalls in Kombination mit Monomeren aus der Gruppe der Styrole und 0 bis 20 Gew.% an ethylenisch ungesättigter Sulfonsäureverbindung und b) einem Mantelpolymerisat aus 60 bis 95 Gew. % an Monomeren aus der Gruppe der Acrylate gegebenenfalls in Kombination mit Monomeren aus der Gruppe der Styrole und 5 bis 40 Gew.% an ethylenisch ungesättigter Sulfonsäureverbindung, wobei der Gehalt an Sulfonsäureverbindung im Mantel über dem Gehalt an Sulfonsäureverbindung im Kern liegt. Die Gruppe der Acrylate umfasst insbesondere Acrylnitril, Acrylsäure, Methacrylsäure, Acrylamid, Methacrylamid sowie Acrylsäure- und Methacrylsäureester mit 1 bis 12 C-Atomen im Esterteil. Als Antibackmittel werdem Microsilica oder Calciumcarbonat vorgeschlagen. Es wird die Verwendung in Straßenbelagsmassen, Zwischen- oder Ausgleichsschichten für die Erhöhung von u.a. Verarbeitbarkeit, Adhäsion, Flexibilität bzw. Elastizität erwähnt.

Aufgabe der vorliegenden Erfindung ist vor diesem Hintergrund die Bereitstellung eines pulverförmigen Zusatzstoffs für Beton, der bereits in dieser Pulverform einem für den Beton verwendeten Zement zugemischt werden kann und zusätzlich eine hohe Tieftemperaturflexibilität und Wasserfestigkeit bewirkt. Dabei sollte der pulverförmige Zusatzstoff bei seiner Verwendung vorzugsweise über ein verbessertes Absetzverhalten, d.h. eine längere Absetzzeit (> 12 Stunden), verfügen, wenn er mit Wasser gemischt wird, bevor diese Mischung zum Anrühren von Zement / Beton verwendet wird. Zudem soll dieser Zusatzstoff vorzugsweise auch zur Herstellung von mit hydraulischen Bindemitteln verfestigten oder stabilisierten Schichten zur Verwendung im Wegebau geeignet sein, wo er vorzugsweise eine Erhöhung der Ermüdungsfestigkeit der mit den hydraulischen Bindemitteln gebundenen Schichten bewirkt. Aufgabe der Erfindung ist außerdem die Bereitstellung eines Verfahrens zur Herstellung dieses Betons.

Die Lösung dieser Aufgabe wird nach dieser Erfindung erreicht durch einen pulverförmigen, polymermodifizierten Zusatzstoff für einen Beton sowie ein Verfahren zur Herstellung dieses Betons mit den Merkmalen der unabhängigen Patentansprüche. Bevorzugte Ausführungsformen des erfindungsgemäßen Zusatzstoffes sind in entsprechenden abhängigen Patentansprüchen aufgeführt. Bevorzugte Ausführungsformen der erfindungsgemäßen Zusatzstoffe entsprechen bevorzugten Ausführungsformen des erfindungsgemäßen Verfahrens und umgekehrt, selbst wenn dies hierin nicht explizit festgestellt wird.

Gegenstand der Erfindung ist somit ein pulverförmiger, polymermodifizierter Zusatzstoff für Beton, der als Komponenten
(a) 55 bis 99,5 Gew.-%, vorzugsweise 60 bis 90 Gew.-%, mehr bevorzugt 65 bis 75 Gew.-% eines Kern-Schale-Polyacrylats mit einer Glasübergangstemperatur Tgk des Kerns ≤ -10 °C, vorzugsweise einer Tgk ≤ -20 °C, und mehr bevorzugt einer Tgk ≤ -30 °C, sowie einer Glasübergangstemperatur Tgs der Schale > 0 °C;
(b) 0,5 bis 5 Gew.-%, vorzugsweise 1 bis 3 Gew.-%, mehr bevorzugt 1,5 bis 2,5 Gew.-% einer pyrogenen oder kolloidalen Kieselsäure mit einer spezifischen Oberfläche im Bereich von 100 bis 300 m²/g;
(c) 0 bis 8 Gew.-%, vorzugsweise 3 bis 7 Gew.-%, mehr bevorzugt 4 bis 6 Gew.-% eines modifizierten Polycarboxylatethers; und
(d) 5 bis 35 Gew.-%, vorzugsweise 5 bis 25 Gew.-%, mehr bevorzugt 18 bis 22 Gew.%, einer Kreide mit einem d50-Wert ≤ 8 µm, vorzugsweise mit einem d50-Wert ≤ 5 µm und ganz bevorzugt mit einem d50-Wert ≤ 4 µm
enthält; wobei sich Gew.-% jeweils auf die Summe der Komponenten des Zusatzstoffes, d.h. hier (a) bis (d), bezieht.

Bei einem erfindungsgemäß bevorzugten Zusatzstoff ist der Beton ein Magerbeton mit einem Zementanteil von weniger als 12 Gew.-%, bezogen auf den Beton.

Überdies ist es erfindungsgemäß bevorzugt, dass der Zusatzstoff ein Zusatzstoff für Beton zur Bodenverfestigung ist.

Der Beton ist erfindungsmäßig nicht eingeschränkt. Aber in einer bevorzugten Ausführungsform des Zusatzstoffes ist der Beton ein Magerbeton mit einem Zementanteil von weniger als 12 Gew.-%, bezogen auf den Beton. Ein Magerbeton enthält neben Zement im Allgemeinen alle Bestandteile, die auch in Betonen mit höheren Zementanteilen üblich sind.

Der erfindungsgemäß eingesetzte Zement ist im Allgemeinen Portlandzement.

Vorzugsweise ist der erfindungsgemäße Zusatzstoff ein Zusatzstoff für Beton zur Bodenverfestigung.

Wenn ein Kern-Schale-Polyacrylat (a) mit einer Glasübergangstemperatur Tgk ≤ -20 °C verwendet wird, wird vorzugsweise ein Polyacrylat verwendet, bei welchem der Kern mindestens 50 % Butyl- und/oder Ethylhexylacrylatmonomere enthält.

Der erfindungsgemäße Zusatzstoff kann insbesondere wegen der Tgs der Schale > 0 °C mittels Sprühtrocknung ohne Verklumpung getrocknet werden.

Das Kern-Schale-Polyacrylat (a) kann Comonomere enthalten. Beispiele für geeignete Comonomere sind Ethylen, Propylen, Butylen, Isopren, Acrylonitril, Acrylsäure, Methacrylsäure, verschiedene Acrylsäurealkylester und/oder Methacrylsäurealkylester, Vinylester, Vinylchlorid und Vinyl- oder Methacrylsilane.

Die Werte für die Glasübergangstemperatur Tgs und Tgk des Kern-Schale-Polyacrylats (a) beziehen sich auf eine Messung mit Differential Scanning Calorimetry (DSC) gemäß DIN EN ISO 11357-1.

Ein erfindungsgemäß geeignetes Kern-Schale-Polyacrylat (a) ist unter der Bezeichnung Dehydro^{™} 8999 bei der Firma Acquos erhältlich.

Neben dem Kern-Schale-Polyacrylat (a) und dem modifizierten Polycarboxylatether (c) kann der erfindungsgemäße Zusatzstoff noch weitere wasserlösliche oder redispergiebare Polymere enthalten. Beispiele für weitere Polymere sind Polyurethane, Polyvinylalkohol, Stärke- / Zellulosederivate, Polyvinylpyrrolidon oder Ethylenvinylacetatcopolymere, die dann ebenfalls in Pulverform eingesetzt werden. Der Zusatzstoff kann beispielsweise hydrophile Polymere wie Cellulosederivate oder Stärkederivate (Methylcellulose, Methylhydroxypropylcellulose, Methylhydroxyethylcellulose oder Hydroxypropylstärke) enthalten.

Sofern diese zusätzlich im erfindungsgemäßen Zusatzstoff enthalten sind, beschränkt sich ihr Gehalt im Allgemeinen auf bis zu 10 Gew.-%, bevorzugt auf bis zu 5 Gew.-%, bezogen auf die Gesamtmasse an Polymeren und Copolymeren im Zusatzstoff.

Der erfindungsgemäße Zusatzstoff enthält als Komponente (b) eine pyrogene oder kolloidale Kieselsäure, vorzugsweise eine pyrogene Kieselsäure. Die Kieselsäure (b) hat vorzugsweise eine spezifische Oberfläche im Bereich von 50 bis 100 m²/g, mehr bevorzugt im Bereich von 100 bis 300 m²/g. Eine geeignete Kieselsäure ist beispielsweise Aerosil^{®} 200 der Fa. Evonik.

Als optionale Komponente (c) enthält der Zusatzstoff einen modifizierten Polycarboxylatether. Ein besonders geeigneter modifizierter Polycarboxylatether wird unter der Bezeichnung Melflux^{®} 1641 F, welches ein rieselfähiges, sprühgetrocknetes Pulver auf Basis eines modifizierten Polycarboxylatethers ist, von der BASF Construction Polymers GmbH vertrieben.

In einer bevorzugten Ausführungsform enthält der Zusatzstoff 0 bis 90 Gew.-% des Kern-Schale-Polyacrylats (a); 1 bis 3 Gew.-% der Kieselsäure (b), 3 bis 7 Gew.-% des modifizierten Polycarboxylatethers (c) und 5 bis 25 Gew.-% der Kreide (d), jeweils bezogen auf die Summe der Komponenten.

Dabei ist wiederum ein Zusatzstoff bevorzugt, der 65 bis 75 Gew.-% des Kern-Schale-Polyacrylats (a); 1,5 bis 2,5 Gew.-% der Kieselsäure (b), 4 bis 6 Gew.-% des Polycarboxylatethers (c) und 18 bis 22 Gew.-% der Kreide (d), jeweils bezogen auf die Summe der Komponenten, enthält.

Der d50-Wert der im Zusatzstoff eingesetzten Kreide (d) ist als mittlere Partikelgröße gemäß DIN 13320 definiert. Der d50-Wert gibt dabei die mittlere Partikelgröße an. D50 bedeutet, dass 50% der Partikel kleiner sind als der angegebene Wert. Die Bestimmung der mittleren Partikelgröße erfolgt im Allgemeinen mittels Laserdiffraktometrie.

In einer besonders bevorzugten Ausführungsform enthält der erfindungsgemäße Zusatzstoff als Komponente (e) ein Silikon-basiertes Hydrophobierungsmittel in einer Menge von 0,1 bis 5 Gew.-%, vorzugsweise in einer Menge von 2 bis 4 Gew.-% und noch mehr bevorzugt in einer Menge von 2,5 bis 3,5 Gew.-%, bezogen auf die Summe der Komponenten (a) bis (e). Ein erfindungsgemäß besonders gut geeignetes hydrophobes Silikon wird unter der Bezeichnung Silres^{®} Powder D von der Firma WACKER vertrieben.

Die Komponenten (a), (b) und (d) sowie die optionalen Komponenten (c) und (e) werden im Allgemeinen in Form ihrer Pulver eingesetzt, so dass der erfindungsgemäße Zusatzstoff durch Mischen der im Allgemeinen in Pulverform vorliegenden Komponenten (a), (b) und (d) bzw. optional zusätzlich (c) und/oder (e) erhalten werden kann.

Die Erfindung betrifft außerdem ein Verfahren zur Herstellung eines Magerbetons, enthaltend einen Schritt der Mischung eines Zements mit einem der vorgenannten Zusatzstoffe und mit einer Gesteinskörnung, wobei der Zement in einer Menge zugesetzt wird, dass der Zementanteil weniger als 12 Gew.-%, bezogen auf den Beton, ist.

Die Gesteinskörnung für Beton und deren Eigenschaften werden nach der EN 12620 definiert und gemessen. Im Standardnachschlagewerk "Zement Taschenbuch 2000, ISBN 3-7640-0399-5" werden diese ausführlich erläutert.

Die Erfindung betrifft außerdem die Verwendung eines pulverförmigen polymermodifizierten Zusatzstoffes, der als Komponenten
(a) 55 bis 99,5 Gew.-% eines Kern-Schale-Polyacrylats mit einer Glasübergangstemperatur Tgk des Kerns ≤ -10°C, sowie einer Glasübergangstemperatur Tgs der Schale > 0 °C;
(b) 0,5 bis 5 Gew.-% einer pyrogenen oder kolloidalen Kieselsäure mit einer spezifischen Oberfläche im Bereich von 100 bis 300 m²/g;
(c) 0 bis 8 Gew.-% eines modifizierten Polycarboxylatethers; und
(d) 5 bis 35 Gew.-% einer Kreide mit einem d50-Wert ≤ 8 µm
enthält, wobei sich Gew.-% jeweils auf die Summe der Komponenten bezieht, als Zusatzstoff für einen Magerbeton mit einem Zementanteil von weniger als 12 Gew.-%, bezogen auf den Beton.

Hierbei ist eine Verwendung als Zusatzstoff für einen Beton zur Bodenverfestigung bevorzugt.

Schließlich betrifft die Erfindung noch die Verwendung eines Magerbetons, der durch einen Schritt der Mischung eines Zements mit einem der oben genannten Zusatzstoffe und mit einer Gesteinskörnung erhalten wurde, wobei der Zement in einer Menge zugesetzt wurde, so dass der Zementanteil weniger als 12 Gew.-%, bezogen auf den Beton, ist, zur Herstellung eines Straßen- oder Wegaufbaus, enthaltend einen Schritt der Herstellung einer hydraulisch gebundenen Schicht, in dem ein Bodenmaterial mit dem Zement und dem vorgenannten Zusatzstoff vermischt wird und eine daraus erhaltene Untergrundschicht kompaktiert wird.

Bevorzugt ist dabei eine Verwendung, bei welcher die hydraulisch gebundene Schicht Zement in einer Menge von 0,3 bis 10 Gew.-%, vorzugsweise in einer Menge von 2 bis 5 Gew.-%, bezogen auf das Gewicht der Schicht, enthält.

Außerdem ist eine Verwendung bevorzugt, bei der die hydraulisch gebundene Schicht den Zusatzstoff in einer Menge von 0,05 bis 0,5 Gew.-%, bezogen auf das Gewicht der Schicht, enthält.

Schließlich ist auch eine Verwendung bevorzugt, bei der auf der hydraulisch gebundenen Schicht eine Deckschicht aufgebracht wird, vorzugsweise eine Bitumen oder Beton enthaltende Deckschicht. Im Standardnachschlagewerk "Straßenbau und Straßenerhaltung, ISBN 3 503 06094 4" ist diese Arbeitsweise ausführlich dokumentiert.

Das Bodenmaterial besteht aus vorhandenen Bodenbestandteilen und/oder Zuschlägen, die für eine hydraulisch gebundene Trägerschicht nötig sind.

Ein Straßenkörper im Straßen- und Wegebau enthält im Allgemeinen einen unterteilten Oberbau, der eine Deckschicht, nämlich die Fahrbahndecke, und ggf. eine sog. Binderschicht trägt. Der unterteilte Oberbau besteht im Allgemeinen aus Tragschichten, die wiederum in ungebundene Tragschichten (Frostschutzschicht, Kies- und Schotterschicht, Bodenverbesserungsschicht) und gebundene Tragschichten unterteilt sind.

Bei der Verwendung des erfindungsgemäßen Zusatzstoffes können beispielsweise in einer Mischanlage ein Bodenmaterial, Zuschlagstoffe, Recycling-Material, Zement und der erfindungsgemäße Zusatzstoff in einer stationären oder mobilen Mischanlage vorab mit optimiertem Wassergehalt gemischt werden. Diese Mischung kann anschließend auf eine Baustelle gebracht werden, wo dann diese beispielsweise als Tragschicht für eine Bodenschicht ausgebracht werden kann. Im Allgemeinen wird dann mit einem Grader ein Planum hergestellt und anschließend eine Verdichtung der homogenisierten und verbesserten Bodenschicht mittels vibrierender Walzen durchgeführt. In weiteren Arbeitsgängen können dann Deckschichten aus Split, Asphalt und/oder Beton aufgebracht werden. Beispielsweise kann eine Deckschicht aus Split und Bitumenemulsion hergestellt werden, wie im Nachschlagewerk Asphalt im Straßenbau, ISBN 978-3-7812-1782-9 ausführlich beschrieben wird.

Allerdings hat der erfindungsgemäße Zusatzstoff den großen Vorteil, dass er bereits einem hergestellten Zement zugemischt werden kann, beispielsweise in einem Zementwerk.

Zur Anwendung kann hierbei vor Ort an einer Baustelle die Verarbeitung des erfindungsgemäßen Zusatzstoffes erfolgen. Dabei kann beispielsweise eine festgelegte Zementmenge auf den anstehenden Boden ausgebracht werden und der Boden bis zu beispielsweise 50 cm mit einer Bodenfräse gefräst werden. Dabei wird der Zement mit optimierter Wassermenge eingearbeitet.

Die Erfindung hat zahlreiche Vorteile. Es können Kosten- und Qualitätsvorteile erzielt werden, wobei die Bauzeit sowie der CO₂-Ausstoß reduziert werden können. Letzteres insbesondere auch durch eine kürzere Einsatzzeit von Baumaschinen. Es ist möglich, eine verbesserte Biegefestigkeit unabhängig von der Menge des im Allgemeinen verwendeten Portlandzements zu erreichen. Schichtdicken der Beton- oder Asphaltdecken können eventuell reduziert werden. Die Wasserempfindlichkeit und somit die Frostempfindlichkeit verringern sich. Die Lebensdauern der Tragschichten bzw. der damit erstellten Straßen- oder Wegbeläge verlängern sich und ebenso die Wartungsperioden von mit recycelten Materialien gebauten Straßen.

Der erfindungsgemäße Zusatzstoff katalysiert nicht nur die Zementreaktion, sondern verhindert auch Auswaschungen von Schadstoffen wie z.B. Steinkohleteer. Er erhöht die Biegefestigkeit und somit die Elastizität der diesen Zusatzstoff enthaltenden Schichten. Der Straßenaufbau und die Schichtdicke können ohne Qualitätseinbußen vereinfacht werden. Es werden Zementstabilisierungen mit allen Arten vorhandener Böden sowie mit recycelten Zuschlagstoffen, Bitumen, organischen Komponenten und Schadstoffen ermöglicht. Es können daher hohe Einsparungen bei Entsorgungs-, Transport- und Materialkosten realisiert werden. Die zusätzliche Verbesserung der Elastizität und der Frostbeständigkeit führt zu deutlich verminderter Rissbildung in der stabilisierten Schicht über die gesamte Lebensdauer. Kurvenreiche Straßen, insbesondere kurvenreiche Bergstraßen, sind nämlich extremen Scherkräften ausgesetzt, so dass es im Allgemeinen zu einem schnellen Abrieb kommt. Zudem können die Witterungsverhältnisse und deren Änderungen die Untergründe stark belasten, insbesondere durch starke Regenfälle und Stürme. Es kann schließlich zu erhöhter Rissbildung in der Tragschicht kommen, so dass die Frostbeständigkeit und Elastizität der Tragschicht wichtig sind. Dadurch vermindert sich die Rissbildung und die Tragschicht nimmt zusätzlich Zugkräfte auf. Dies führt zu deutlich längerer Haltbarkeit und besserer Qualität. Darüber hinaus kann ein recycelter Straßenbelag sicher in die Tragschicht einbezogen werden.

Es wird zudem ein Zusatzstoff bereitgestellt, bei dessen Einsatz hohe Biegefestigkeitswerte der Bodenschicht erreicht werden können. Es wird ein absolut umweltverträgliches Produkt erhalten, das sich sehr rasch mit dem zulaufenden Wasser auf einer Baustelle vermischen kann, wenn der Zusatzstoff vor der Vermischung mit Zement zuerst dem nötigen Anmachwasser zugegeben wird. Überdies kann auf Salz-Zusätze und hydrophile Polymerbestandteile verzichtet werden. Belastungssimulationen haben überdies eine verlängerte Lebensdauer der Straße ergeben.

Bei der Straßenherstellung können eine besonders elastische hydraulisch gebundene Tragschicht (HGT) und eine Asphaltdeckschicht kombiniert werden. Durch den erfindungsgemäßen Zusatzstoff kann dabei die Elastizität der HGT erhöht und dadurch die Rissbildung erheblich verringert werden. Damit ist auch eine Reduzierung der Stärke einer Asphaltdeckschicht möglich, z.B. von 14 cm auf 8 cm. Die Druckfestigkeit erhöht sich auch ohne Einsatz von Entspannungswalzen. Es wird eine kürzere Bauzeit und eine dünnere Asphaltdecke ermöglicht, wobei erreicht werden kann, dass weder Rissbildungen noch Setzungen auftreten. Es ist in einigen Fällen kein Transport und Einsatz von Primärrohstoffen (Kies, Splitt) für die HGT erforderlich, so dass durch den verringerten Einsatz von Baufahrzeugen auch der CO₂-Ausstoß verringert werden kann. Es kann eine Stabilisierung von Wegen, z.B. von Waldwegen im alpinen Raum bei hoher Frost-Tau-Belastung erreicht werden. Eine Stabilisierung wird dabei schon mit Zement und Zusatzstoff, ohne eine Tragschicht, erreicht.

## Patentansprüche

1. Pulverförmiger polymermodifizierter Zusatzstoff für Beton,
**dadurch gekennzeichnet, dass** er als Komponenten
(a) wenigstens 55 Gew.-% eines Kern-Schale-Polyacrylats mit einer Glasübergangstemperatur Tgk des Kerns ≤ -10°C, sowie einer Glasübergangstemperatur Tgs der Schale > 0 °C;
(b) 0,5 bis 5 Gew.-% einer pyrogenen oder kolloidalen Kieselsäure mit einer spezifischen Oberfläche im Bereich von 100 bis 300 m²/g; und
(d) 5 bis 35 Gew.-% einer Kreide mit einem d50-Wert ≤ 8 µm enthält, wobei sich Gew.-% jeweils auf die Summe der Komponenten bezieht.

2. Zusatzstoff nach Anspruch 1, **dadurch gekennzeichnet, dass** er zusätzlich als Komponente (e) ein Silikon-basiertes Hydrophobierungsmittel in einer Menge von 0,1 bis 5 Gew.-%, bezogen auf die Summe der Komponenten (a) bis (e) enthält.

3. Verwendung eines pulverförmigen polymermodifizierten Zusatzstoffes, der als Komponenten
(a) wenigstens 55 Gew.-% eines Kern-Schale-Polyacrylats mit einer Glasübergangstemperatur Tgk des Kerns ≤ -10°C, sowie einer Glasübergangstemperatur Tgs der Schale > 0 °C;
(b) 0,5 bis 5 Gew.-% einer pyrogenen oder kolloidalen Kieselsäure mit einer spezifischen Oberfläche im Bereich von 100 bis 300 m²/g;
und
(d) 5 bis 35 Gew.-% einer Kreide mit einem d50-Wert ≤ 8 µm enthält, wobei sich Gew.-% jeweils auf die Summe der Komponenten bezieht, als Zusatzstoff für einen Magerbeton mit einem Zementanteil von weniger als 12 Gew.-%, bezogen auf den Beton.

4. Verwendung nach Anspruch 3, wobei der pulverförmige polymermodifizierte Zusatzstoff als Zusatzstoff für einen Beton zur Bodenverfestigung verwendet wird.

5. Verfahren zur Herstellung eines Magerbetons, enthaltend einen Schritt der Mischung eines Zements mit einem Zusatzstoff nach einem der Ansprüche 1 oder 2 und mit einer Gesteinskörnung, wobei der Zement in einer Menge zugesetzt wird, dass der Zementanteil weniger als 12 Gew.-%, bezogen auf den Beton, ist.

6. Verwendung eines Magerbetons, der durch einen Schritt der Mischung eines Zements mit einem Zusatzstoff nach einem der Ansprüche 1 oder 2 bis 4 und mit einer Gesteinskörnung erhalten wurde, wobei der Zement in einer Menge zugesetzt wurde, so dass der Zementanteil weniger als 12 Gew.-%, bezogen auf den Beton, ist, zur Herstellung eines Straßen- oder Wegaufbaus ist, enthaltend einen Schritt der Herstellung einer hydraulisch gebundenen Schicht, in dem ein Bodenmaterial mit dem Zement und dem Zusatzstoff nach einem der Ansprüche 1 oder 2 vermischt wird und eine daraus erhaltene Untergrundschicht kompaktiert wird.

7. Verwendung nach Anspruch 6, **dadurch gekennzeichnet, dass** die hydraulisch gebundene Schicht Zement in einer Menge von 0,3 bis 10 Gew.-%, vorzugsweise in einer Menge von 2 bis 5 Gew.-%, bezogen auf das Gewicht der Schicht, enthält.

8. Verwendung nach einem der Ansprüche 6 oder 7, **dadurch gekennzeichnet, dass** die hydraulisch gebundene Schicht den Zusatzstoff in einer Menge von 0,05 bis 0,5 Gew.-%, bezogen auf das Gewicht der Schicht, enthält.

9. Verwendung nach einem der Ansprüche 6 bis 8, **dadurch gekennzeichnet, dass** auf der hydraulisch gebundenen Schicht eine Deckschicht aufgebracht wird, vorzugsweise eine Bitumen oder Beton enthaltende Deckschicht.

## Claims

1. Powdered polymer-modified admixture for concrete,
**characterized in that** it comprises as components
(a) at least 55% by weight of a core-shell polyacrylate having a glass transition temperature Tgk of the core ≤ -10°C, and a glass transition temperature Tgs of the shell > 0°C;
(b) 0.5 to 5% by weight of a fumed or colloidal silica having a specific surface area in the range of 100 to 300 m²/g;
and
(d) 5 to 35 % by weight of a chalk having a d50 value ≤ 8 µm ;
where % by weight in each case refers to the sum of the components.

2. Additive according to claim 1, **characterized in that** it additionally contains as component (e) a silicone-based hydrophobing agent in an amount of 0.1 to 5% by weight, based on the sum of components (a) to (e).

3. Use of a powdered polymer-modified additive comprising, as components
(a) at least 55% by weight of a core-shell polyacrylate having a glass transition temperature Tgk of the core ≤ -10°C, and a glass transition temperature Tgs of the shell > 0°C;
(b) 0.5 to 5% by weight of a fumed or colloidal silica having a specific surface area in the range of 100 to 300 m²/g;
and
(d) 5 to 35% by weight of a chalk having a d50 value ≤ 8 µm ;
where % by weight refers in each case to the sum of the components, as an additive for a lean concrete having a cement content of less than 12 % by weight, based on the concrete.

4. Use according to claim 3, wherein the powdered polymer-modified additive is used as an additive for a concrete for soil consolidation.

5. Method for the manufacture of a lean concrete comprising a step of mixing a cement with an additive according to one of claims 1 or 2 and with an aggregate, wherein the cement is added in an amount such that the cement content is less than 12% by weight, based on the concrete.

6. Use of a lean concrete obtained by a step of mixing a cement with an additive according to any one of claims 1 or 2 and with an aggregate, the cement being added in an amount such that the cement content is less than 12 wt. %, based on the concrete, for producing a road or path structure, comprising a step of producing a hydraulically bound layer in which a soil material is mixed with the cement and the additive according to one of claims 1 or 2 and a subgrade layer obtained therefrom is compacted.

7. Use according to claim 6, **characterized in that** the hydraulically bound layer contains cement in an amount of 0.3 to 10% by weight, preferably in an amount of 2 to 5% by weight, based on the weight of the layer.

8. Use according to one of claims 6 or 7, **characterized in that** the hydraulically bound layer contains the additive in an amount of 0.05 to 0.5% by weight, based on the weight of the layer.

9. Use according to one of claims 6 to 8, **characterized in that** a top layer is applied to the hydraulically bound layer, preferably a top layer containing bitumen or concrete.

## Revendications

1. Additif en poudre modifié par des polymères pour le béton,
**caractérisé en ce qu'**il contient comme composants
(a) au moins 55% en poids d'un polyacrylate noyau/enveloppe ayant une température de transition vitreuse Tgk du noyau ≤ -10°C, ainsi qu'une température de transition vitreuse Tgs de l'enveloppe > 0°C ;
(b) 0,5 à 5 % en poids d'une silice pyrogénée ou colloïdale ayant une surface spécifique comprise entre 100 et 300 m²/g ;
et
(d) 5 à 35 % en poids d'une craie ayant une valeur d50 ≤ 8 µm où % en poids se réfère dans chaque cas à la somme des composants.

2. Additif selon la revendication 1, **caractérisé en ce qu'**il contient en outre comme composant (e) un agent hydrophobe à base de silicone en une quantité de 0,1 à 5 % en poids, par rapport à la somme des composants (a) à (e).

3. Utilisation d'un additif en poudre modifié par un polymère, qui contient comme composants
(a) au moins 55 % en poids d'un polyacrylate noyau/enveloppe ayant une température de transition vitreuse Tgk du noyau ≤ -10°C, ainsi qu'une température de transition vitreuse Tgs de l'enveloppe > 0°C ;
(b) 0,5 à 5 % en poids d'une silice pyrogénée ou colloïdale ayant une surface spécifique comprise entre 100 et 300 m²/g ;
et
(d) 5 à 35 % en poids d'une craie ayant une valeur d50 ≤ 8 µm ;
où % en poids se rapporte à chaque fois à la somme des composants, en tant qu'additif pour un béton maigre avec une teneur en ciment de moins de 12 % en poids, par rapport au béton.

4. Utilisation selon la revendication 3, dans laquelle l'additif pulvérulent modifié par des polymères est utilisé comme additif pour un béton destiné à la consolidation des sols.

5. Procédé de fabrication d'un béton maigre comprenant une étape de mélange d'un ciment avec un adjuvant selon l'une des revendications 1 ou 2 et avec un granulat, le ciment étant ajouté en une quantité telle que la proportion de ciment est inférieure à 12% en poids par rapport au béton.

6. Utilisation d'un béton maigre obtenu par une étape de mélange d'un ciment avec un adjuvant selon l'une des revendications 1 ou 2 et avec un granulat, le ciment étant ajouté en une quantité telle que la proportion de ciment est inférieure à 12 % en poids par rapport au béton, pour la réalisation d'une structure de route ou de chemin, comprenant une étape de réalisation d'une couche liée hydrauliquement, dans laquelle un matériau de sol est mélangé avec le ciment et l'additif selon l'une des revendications 1 ou 2, et une couche de fondation obtenue est compactée.

7. Utilisation selon la revendication 6, **caractérisée en ce que** la couche à liant hydraulique contient du ciment en une quantité de 0,3 à 10 % en poids, de préférence en une quantité de 2 à 5 % en poids par rapport au poids de la couche.

8. Utilisation selon l'une des revendications 6 ou 7, **caractérisée en ce que** la couche liée hydrauliquement contient l'additif en une quantité de 0,05 à 0,5% en poids par rapport au poids de la couche.

9. Utilisation selon l'une des revendications 6 à 8, **caractérisée en ce qu'**une couche de finition est appliquée sur la couche liée hydrauliquement, de préférence une couche de finition contenant du bitume ou du béton.
